# EUROPÄISCHE PATENTSCHRIFT

(11) **EP 2 884 607 B1**
(45) Veröffentlichungstag und Bekanntmachung des Hinweises auf die Patenterteilung: **06.07.2016**
(21) Anmeldenummer: 14194261.5
(22) Anmeldetag: 21.11.2014
(51) Int. Cl.: H02G 1/06

(54) **Kabelpflug und Verfahren zum Betrieb eines Kabelpflugs**
Cable plough and method for operating a cable plough
Enfouisseuse de câbles et procédé de fonctionnement d'une enfouisseuse de câbles

(30) Priorität: 16.12.2013 DE 102013114087
(43) Veröffentlichungstag der Anmeldung: 17.06.2015
(73) Patentinhaber: Frank Föckersperger GmbH, 91086 Aurachtal-Münchaurach (DE)
(72) Erfinder: Föckersperger, Frank, 91086 Aurachtal (DE)
(74) Vertreter: Schlögl, Markus

(56) Entgegenhaltungen:
- AU-B2- 416 325
- DE-C2- 4 210 858
- US-B1- 6 189 244

## Beschreibung

Die Erfindung betrifft einen Kabelpflug zum Einbringen mindestens einer Leitung, insbesondere mindestens eines Rohres oder Kabels, in den Erdboden und ein Verfahren zum Betrieb eines Kabelpflugs.

Ein derartiger Kabelpflug umfasst zur Bildung einer Erdrinne ein zum Eingriff in den Erdboden geeignetes Schwert und eine Leitungsführung zum Einlegen der Leitung in die durch das Schwert gebildete oder bildbare Erdrinne. Das Schwert ist zumindest abschnittsweise in einer Schwertführung angeordnet. Zur Verbindung von Schwert und Leitungsführung sind eine Aufhängung am oberen Ende oder nahe dem oberen Ende von Schwert und Leitungsführung und ein Gelenkhebel zwischen den unteren Enden oder nahe den unteren Enden von Schwert und Leitungsführung vorgesehen. Die Leitungsführung ist in einer vorgesehenen Fahrtrichtung hinter dem Schwert angeordnet.

Kabelpflüge dienen dem Einbringen von Leitungen ins Erdreich. Dabei bildet das Schwert eine Erdrinne, in die die Leitungsführung die Leitung einlegt. Bei unterschiedlichen Böden oder in schwierigem Gelände kann es notwendig sein, das Schwert bzw. die Leitungsführung unterschiedlich tief in den Erdboden eindringen zu lassen.

Zum Stand der Technik wird verwiesen auf DE 42 10 858 C2, DE 101 15 456 A1 und US 4 244 123 A.

AU 416315 offenbart einen Kabelpflug nach dem Oberbegriff des Anspruchs 1 bzw ein Verfahren nach dem Oberbegriff des Anspruchs 12.

Es ist daher Aufgabe der Erfindung, einen neuen Kabelpflug und ein Verfahren zum Betrieb eines Kabelpflugs anzugeben, bei dem insbesondere die Eindringtiefe von Schwert und Leitungsführung einfach geändert oder angepasst werden kann.

Diese Aufgabe wird hinsichtlich des Kabelpflugs gelöst durch die Merkmale des Anspruchs 1 und hinsichtlich des Verfahrens durch die Merkmale des Anspruchs 12. Vorteilhafte Ausgestaltungen und Weiterbildungen sind in den jeweils abhängigen Ansprüchen angegeben.

Der erfindungsgemäße Kabelpflug ist dadurch gekennzeichnet, dass an der Aufhängung drei Stellzylinder angeordnet sind. Ein erster Stellzylinder ist zum gleichzeitigen Anheben oder Absenken von Schwert und Leitungsführung in Relation zur Schwertführung vorgesehen. Ein zweiter Stellzylinder ist zum Anheben oder Absenken des Schwerts in Relation zur Schwertführung vorgesehen und ein dritter Stellzylinder ist zum Anheben oder Absenken der Leitungsführung in Relation zur Schwertführung vorgesehen.

Die Vorteile der Erfindung liegen insbesondere darin, dass die Eindringtiefe von Schwert und Leitungsführung einfach und schnell geändert oder angepasst werden kann. Ein weiterer Vorteil besteht darin, dass insbesondere die Eindringtiefe von Schwert und Leitungsführung in Relation zueinander präzise eingestellt und verändert werden kann.

Unter vorgesehener Fahrtrichtung wird in erster Linie die Richtung verstanden, in die sich das Fahrzeug während einer geradlinigen Vorwärtsbewegung bewegt.

Gemäß einer Weiterbildung der Erfindung umfasst die Leitungsführung einen entgegen der vorgesehenen Fahrtrichtung am unteren, dem Schwert abgewandten Ende der Leitungsführung ausmündenden Leitungskanal, wobei die den Mündungsabschnitt des Leitungskanals nach unten begrenzende Wandung eine Streichfläche bildet, und wobei das Schwert an seinem unteren Ende eine Schneidkante aufweist.

Eine Weiterbildung der Erfindung sieht vor, dass in einer Grundstellung der drei Stellzylinder die Schneidkante des Schwerts im Wesentlichen in einer Ebene mit der Streichfläche der Leitungsführung verläuft, wobei die Ebene im Wesentlichen parallel zu und oberhalb einer Geländeoberfläche verläuft, und wobei in einer Arbeitsstellung der drei Stellzylinder Schwert und Leitungsführung in den Erdboden eindringen oder in den Erdboden eingedrungen sind, wobei die Schneidkante und die Streichfläche entlang oder unterhalb der Geländeoberfläche verlaufen.

Eine vorteilhafte Weiterbildung sieht vor, dass der erste Stellzylinder an seinem oberen Ende oder nahe seinem oberen Ende an der Aufhängung befestigt und an seinem unteren Ende oder nahe seinem unteren Ende an der Schwertführung befestigt ist, wobei eine Hubbewegung des ersten Stellzylinders ein Anheben oder Absenken von Schwert und Leitungsführung bewirkt.

Bevorzugt werden zum Überführen von Schwert und Leitungsführung aus der Grundstellung in die Arbeitsstellung das Schwert und die Leitungsführung mittels des ersten Stellzylinders gleichzeitig abgesenkt oder sind gleichzeitig absenkbar, so dass die Schneidkante des Schwerts und die Streichfläche der Leitungsführung anschließend im Wesentlichen parallel zu und entlang oder unterhalb der Geländeoberfläche in einer Ebene verlaufen.

Weiterhin kann vorgesehen sein, dass zum Überführen von Schwert und Leitungsführung aus der Arbeitsstellung in die Grundstellung das Schwert und die Leitungsführung mittels des ersten Stellzylinders gleichzeitig angehoben werden oder anhebbar sind, wobei Schwert und Leitungsführung aus dem Erdboden herausgehoben werden oder heraushebbar sind.

Eine vorteilhafte Weiterbildung sieht vor, dass der zweite Stellzylinder an seinem oberen Ende oder nahe seinem oberen Ende an der Aufhängung befestigt ist und an seinem unteren Ende oder nahe seinem unteren Ende an dem Schwert befestigt ist, wobei eine Hubbewegung des zweiten Stellzylinders ein Anheben oder Absenken des Schwerts bewirkt.

Vorzugsweise wird zur Erleichterung des Eindringens von Schwert und Leitungsführung in den Erdboden das Schwert mittels des zweiten Stellzylinders abgesenkt oder ist absenkbar, so dass die Schneidkante des Schwerts in Bezug zur Geländeoberfläche tiefer in den Erdboden eindringt.

Weiterhin kann vorgesehen sein, dass der dritte Stellzylinder an seinem oberen Ende oder nahe seinem oberen Ende an der Aufhängung befestigt ist und an seinem unteren Ende oder nahe seinem unteren Ende an der Leitungsführung befestigt ist, wobei eine Hubbewegung des dritten Stellzylinders ein Anheben oder Absenken der Leitungsführung bewirkt.

Bevorzugt wird zur Verbesserung des Einlegens der Leitung in den Erdboden die Leitungsführung mittels des dritten Stellzylinders abgesenkt oder ist absenkbar, so dass die Streichfläche der Leitungsführung in Bezug zur Geländeoberfläche tiefer in den Erdboden eindringt.

Gemäß einer Weiterbildung der Erfindung ist der dritte Stellzylinder an seinem oberen Ende oder nahe seinem oberen Ende an der Aufhängung zur Anpassung des Winkels zwischen Schneidkante des Schwerts und Streichfläche der Leitungsführung über ein Gelenk drehbeweglich befestigt und um eine durch den Mittelpunkt des Gelenks verlaufende Schwenkachse schwenkbar. Beispielsweise kann über das Gelenk der Winkel zwischen Schneidkante des Schwerts und Streichfläche der Leitungsführung derart angepasst werden, dass die Leitung in einem zum Geländeoberfläche steileren oder flacheren Winkel in den Erdboden eingebracht werden kann.

Das erfindungsgemäße Verfahren zum Betrieb eines Kabelpflugs, insbesondere eines erfindungsgemäßen Kabelpflugs ist dadurch gekennzeichnet, dass in vorgesehener Reihenfolge mittels eines ersten Stellzylinders Schwert und Leitungsführung angehoben oder abgesenkt werden, mittels eines zweiten Stellzylinders das Schwert angehoben oder abgesenkt wird, mittels eines dritten Stellzylinders die Leitungsführung angehoben oder abgesenkt wird.

Bei der vorgesehenen Reihenfolge handelt es sich um diejenige Reihenfolge, die notwendig, zielführend oder vorteilhaft ist, um Schwert und Leitungsführung aus ihrer jeweiligen Position in eine gewünschte Position zu überführen.

Die Vorteile des Verfahrens liegen insbesondere auch darin, dass die Eindringtiefe von Schwert und Leitungsführung einfach und schnell geändert werden kann. Ein weiterer Vorteil besteht ebenfalls darin, dass insbesondere die Eindringtiefe von Schwert und Leitungsführung in Relation zueinander präzise eingestellt und verändert werden kann.

Eine besonders vorteilhafte Weiterbildung der Erfindung sieht vor, dass zur Überführung von Schwert und Leitungsführung aus der Grundstellung in die Arbeitsstellung das Schwert und die Leitungsführung mittels des ersten Stellzylinders gleichzeitig abgesenkt werden, und zur Überführung von Schwert und Leitungsführung aus der Arbeitsstellung in die Grundstellung das Schwert und die Leitungsführung mittels des ersten Stellzylinders gleichzeitig angehoben werden.

Auch kann vorgesehen sein, dass zur Verbesserung des Heraushebens von Schwert und Leitungsführung aus dem Erdboden einmal oder mehrfach nacheinander abwechselnd zuerst die Leitungsführung und nachfolgend das Schwert angehoben werden, indem einmal oder mehrfach nacheinander abwechselnd der dritte und der zweite Stellzylinder eine Hubbewegung ausführen.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Es zeigen
- FIG 1: ein Ausführungsbeispiel des erfindungsgemäßen Kabelpflugs in einer Grundstellung in einer Seitenansicht;
- FIG 2: das Ausführungsbeispiel nach FIG 1 in einer ersten Stellung in einer Seitenansicht;
- FIG 3: das Ausführungsbeispiel nach FIG 1 in einer zweiten Stellung in einer Seitenansicht;
- FIG 4: das Ausführungsbeispiel nach FIG 1 in einer dritten Stellung in einer Seitenansicht;
- FIG 5: das Ausführungsbeispiel nach FIG 1 in einer vierten Stellung in einer Seitenansicht;
- FIG 6: das Ausführungsbeispiel nach FIG 1 in einer fünften Stellung in einer Seitenansicht;
- FIG 7: das Ausführungsbeispiel nach FIG 1 in einer sechsten Stellung in einer Seitenansicht;
- FIG 8: das Ausführungsbeispiel nach FIG 1 in allen Stellungen gemäß den FIG 2 bis 7 als Ablaufplan.

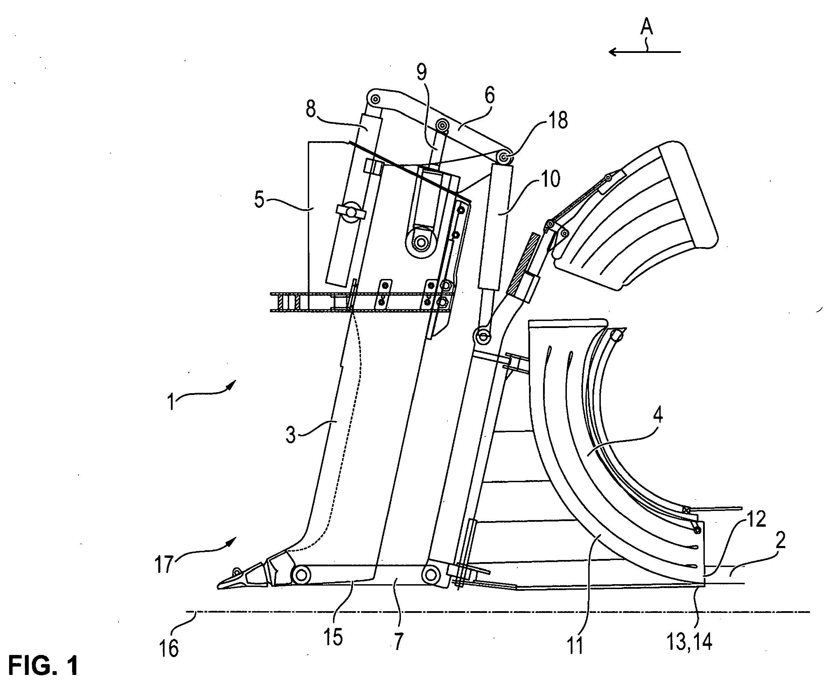

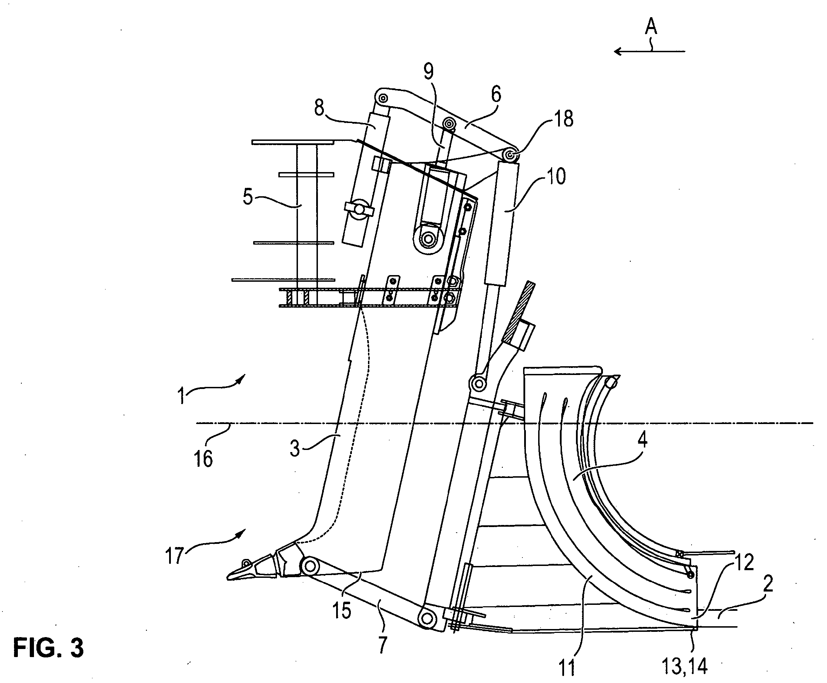

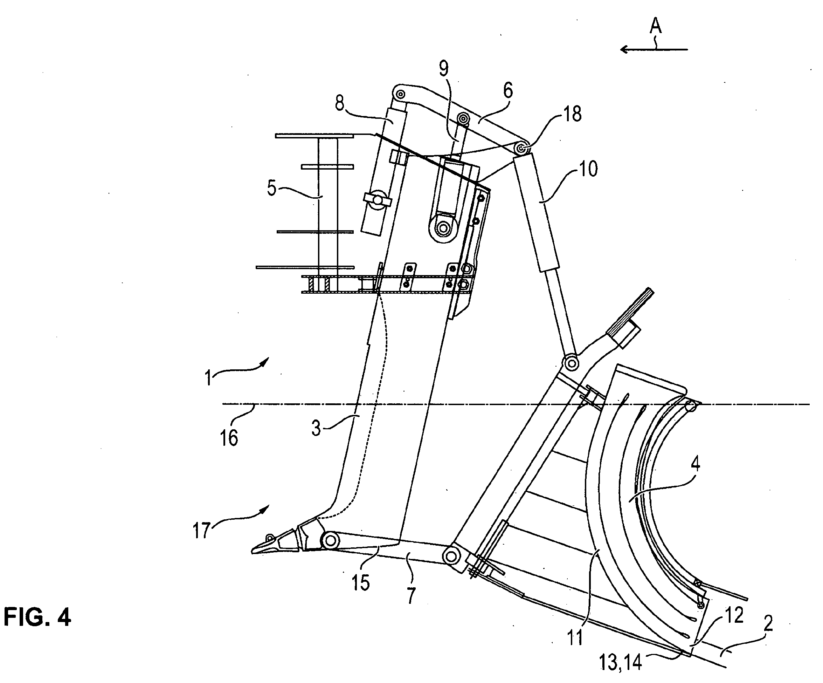

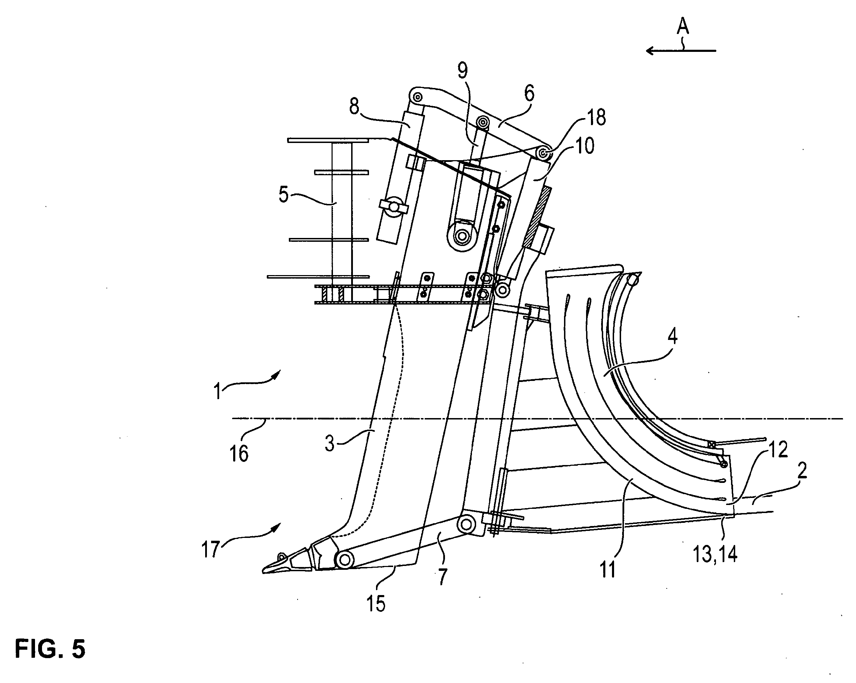

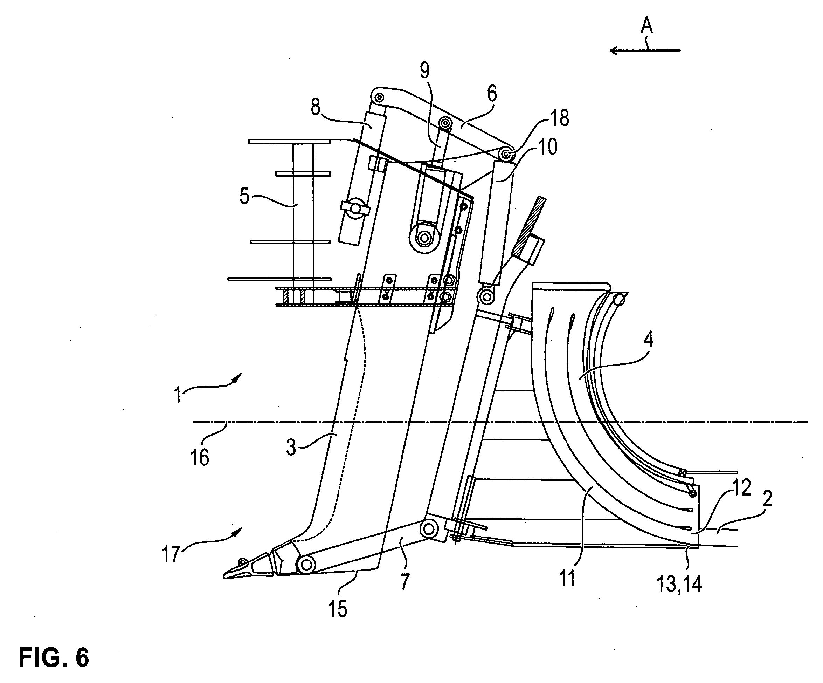

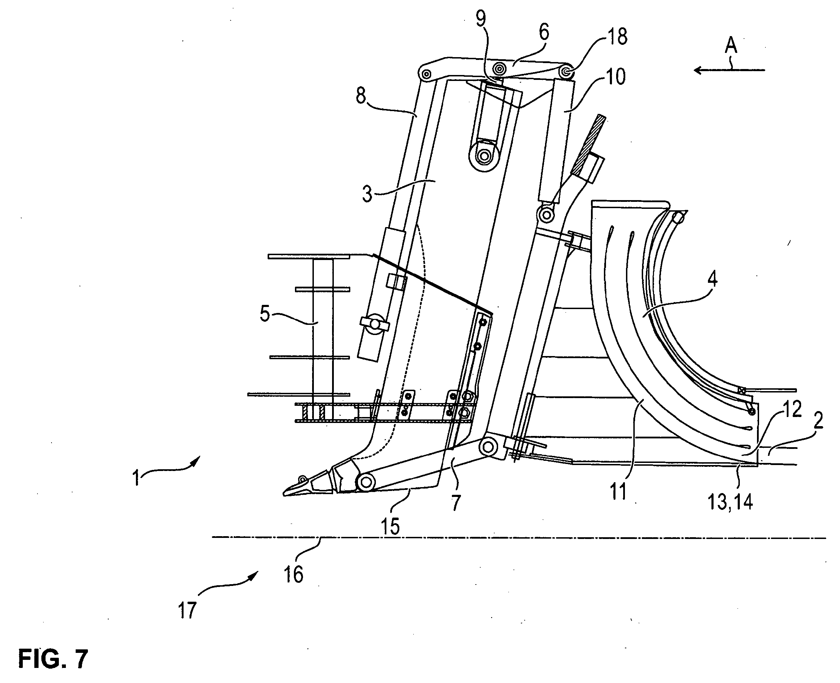

Einander entsprechende Teile und Komponenten in FIG 1 bis FIG 8, auch über die verschiedenen Ausführungsbeispiele hinweg, sind mit den gleichen Bezugszeichen bezeichnet.

FIG 1 bis 7 zeigen einen Kabelpflug 1 zum Einbringen einer Leitung 2 in den Erdboden 17. Der Kabelpflug 1 umfasst zur Bildung einer Erdrinne ein zum Eingriff in den Erdboden 17 geeignetes Schwert 3 und eine Leitungsführung 4 zum Einlegen der Leitung 2 in die durch das Schwert 3 gebildete Erdrinne.

Das Schwert 3 ist abschnittsweise in einer Schwertführung 5 angeordnet ist. Zur Verbindung von Schwert 3 und Leitungsführung 4 ist eine Aufhängung 6 nahe dem oberen Ende von Schwert 3 und Leitungsführung 4 und ein Gelenkhebel 7 zwischen den unteren Enden von Schwert 3 und Leitungsführung 4 vorgesehen. Die Leitungsführung 4 ist in einer vorgesehenen Fahrtrichtung A hinter dem Schwert 3 angeordnet.

An der Aufhängung 6 sind drei Stellzylinder 8, 9, 10 angeordnet. Ein erster Stellzylinder 8 ist zum gleichzeitigen Anheben oder Absenken von Schwert 3 und Leitungsführung 4 in Relation zur Schwertführung 5 vorgesehen. Ein zweiter Stellzylinder 9 ist zum Anheben oder Absenken des Schwerts 3 und ein dritter Stellzylinder 10 ist zum Anheben oder Absenken der Leitungsführung 4 jeweils in Relation zur Schwertführung 5 vorgesehen.

Die Leitungsführung 4 umfasst einen entgegen der vorgesehenen Fahrtrichtung A am unteren, dem Schwert 3 abgewandten Ende der Leitungsführung 4 ausmündenden Leitungskanal 11, wobei die den Mündungsabschnitt 12 des Leitungskanals 11 nach unten begrenzende Wandung 13 eine Streichfläche 14 bildet. Das Schwert 3 weist an seinem unteren Ende eine Schneidkante 15 auf.

In einer Grundstellung der drei Stellzylinder 8, 9, 10, dargestellt in FIG 1, verläuft die Schneidkante 15 des Schwerts 3 im Wesentlichen in einer Ebene mit der Streichfläche 14 der Leitungsführung 4, wobei die Ebene im Wesentlichen parallel zu und oberhalb der Geländeoberfläche 16 verläuft.

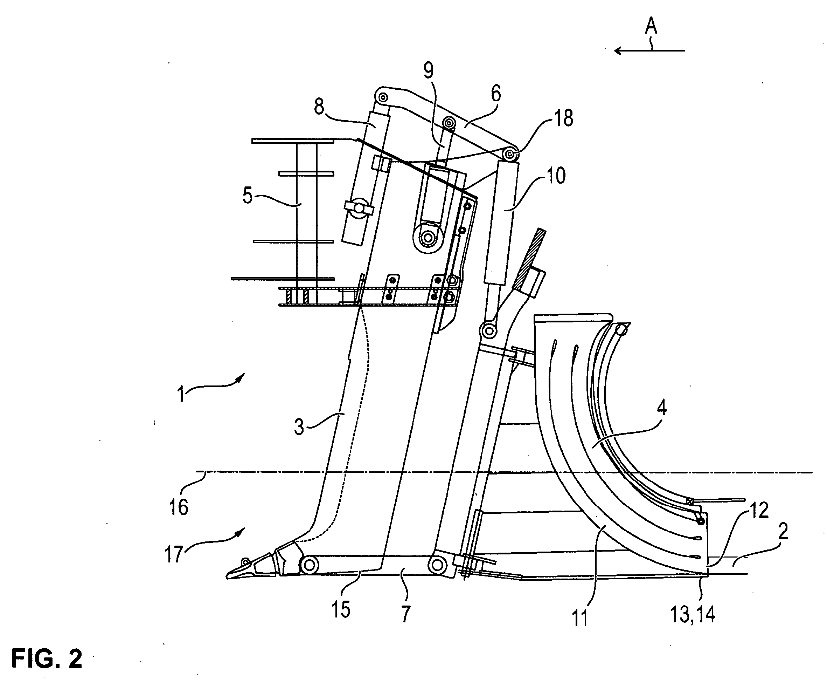

In einer Arbeitsstellung der drei Stellzylinder 8, 9, 10, dargestellt in den FIG 2 bis 6, in der Schwert 3 und Leitungsführung 4 in den Erdboden 17 eingedrungen sind, verlaufen die Schneidkante 15 und die Streichfläche 14 unterhalb der Geländeoberfläche 16.

Der erste Stellzylinder 8 ist an seinem oberen Ende an der Aufhängung 6 und nahe seinem unteren Ende an der Schwertführung 5 befestigt. Eine Hubbewegung des ersten Stellzylinders 8 bewirkt ein Anheben oder Absenken von Schwert 3 und Leitungsführung 4.

Zum Überführen von Schwert 3 und Leitungsführung 4 aus der Grundstellung in die Arbeitsstellung werden das Schwert 3 und die Leitungsführung 4 mittels des ersten Stellzylinders 8 gleichzeitig abgesenkt, so dass die Schneidkante 15 des Schwerts 3 und die Streichfläche 14 der Leitungsführung 4 anschließend im Wesentlichen parallel zu und unterhalb der Geländeoberfläche 16 in einer Ebene verlaufen.

Zum Überführen von Schwert 3 und Leitungsführung 4 aus der Arbeitsstellung zurück in die Grundstellung werden das Schwert 3 und die Leitungsführung 4 mittels des ersten Stellzylinders 8 gleichzeitig angehoben. Dabei werden Schwert 3 und Leitungsführung 4 wieder aus dem Erdboden 17 herausgehoben.

Der zweite Stellzylinder 9 ist an seinem oberen Ende an der Aufhängung 6 und an seinem unteren Ende an dem Schwert 3 befestigt. Eine Hubbewegung des zweiten Stellzylinders bewirkt ein Anheben oder Absenken des Schwerts 3. Das Schwert 3 wird mittels des zweiten Stellzylinders 4 zur Erleichterung des Eindringens von Schwert 3 und Leitungsführung 4 in den Erdboden 17 abgesenkt, so dass die Schneidkante 3 des Schwerts 4 in Bezug zur Geländeoberfläche 16 tiefer in den Erdboden 17 eindringt.

Der dritte Stellzylinder 10 ist nahe seinem oberen Ende an der Aufhängung 6 und nahe seinem unteren Ende an der Leitungsführung 4 befestigt. Eine Hubbewegung des dritten Stellzylinders 10 bewirkt ein Anheben oder Absenken der Leitungsführung 4. Die Leitungsführung 4 wird zur Verbesserung des Einlegens der Leitung 2 in den Erdboden 17 mittels des dritten Stellzylinders 10 abgesenkt, so dass die Streichfläche 14 der Leitungsführung 4 in Bezug zur Geländeoberfläche 16 tiefer in den Erdboden 17 eindringt.

Der dritte Stellzylinder 10 ist an seinem oberen Ende an der Aufhängung 6 zur Anpassung des Winkels zwischen Schwert 3 und Leitungsführung 4 über ein Gelenk 18 drehbeweglich befestigt.

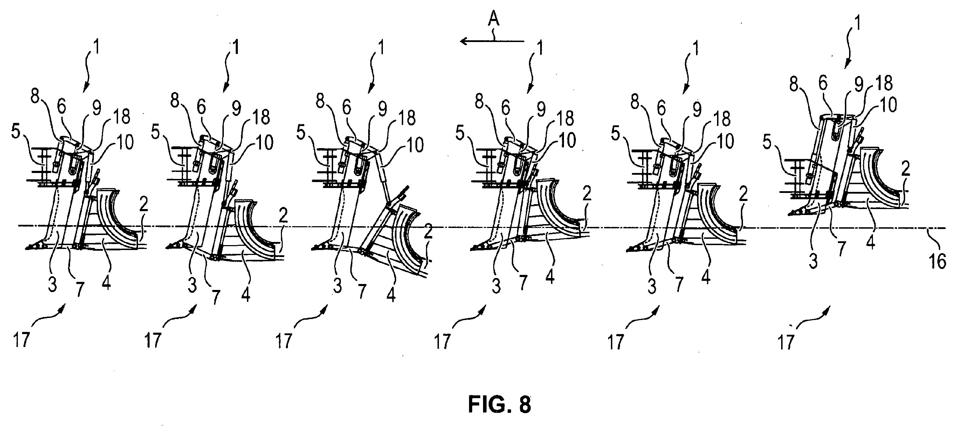

FIG 8 zeigt das Ausführungsbeispiel nach FIG 1 in allen Stellungen gemäß den FIG 1 bis 7 und stellt von rechts nach links beispielhaft einen möglichen zeitlichen Ablauf des Verfahrens zum Betrieb des Kabelpflugs 1 dar. Eine vorgesehene Fahrtrichtung des Kabelpflugs 1 ist mit dem Bezugszeichen A bezeichnet.

Schwert 3 und Leitungsführung 4 werden aus einer ersten in eine zweite Stellung überführt, indem Schwert 3 und Leitungsführung 4 mittels des ersten Stellzylinders 8 in Relation zur Schwertführung 5 gleichzeitig abgesenkt werden und damit in die Arbeitsstellung überführt werden, in der Schwert 3 und Leitungsführung 4 in den Erdboden 17 eingedrungen sind und damit die Schneidkante 15 und die Streichfläche 14 unterhalb der Geländeoberfläche 16 verlaufen. Zudem wird das Schwert 3 mittels des zweiten Stellzylinders 9 gegenüber der Schwertführung 5 abgesenkt, so dass die Schneidkante 15 des Schwerts 3 tiefer in den Erdboden 16 eindringt als die Streichfläche 14 der Leitungsführung 4.

Schwert 3 und Leitungsführung 4 werden aus der zweiten in eine dritte Stellung überführt, indem der dritte Stellzylinder 10 über das Gelenk 18 in Richtung des Schwerts 3 geschwenkt wird. Dies hat zur Folge, dass der Winkel zwischen Schneidkante 15 des Schwerts 3 und Streichfläche 14 der Leitungsführung 4 dahingehend angepasst wird, dass die Leitung 2 in einem zur Geländeoberfläche 16 steileren Winkel in den Erdboden 17 eingebracht werden kann.

Schwert 3 und Leitungsführung 4 werden nachfolgend aus der dritten in eine vierte Stellung überführt, indem der dritte Stellzylinder 10 über das Gelenk 18 vom Schwert 3 weg geschwenkt wird und der dritte Stellzylinder 10 die Leitungsführung 4 gegenüber der Schwertführung 5 abgesenkt. Dies hat zur Folge, dass der Winkel zwischen Schneidkante 15 des Schwerts 3 und Streichfläche 14 der Leitungsführung 4 dahingehend angepasst wird, dass die Streichfläche 14 der Leitungsführung 4 tiefer im Erdboden 17 liegt und zur Schneidkante 15 des Schwerts 3 geneigt ist.

Anschließend werden Schwert 3 und Leitungsführung 4 aus der vierten in eine fünfte Stellung überführt, indem der dritte Stellzylinder 10 über das Gelenk 18 so weit in Richtung des Schwerts 3 geschwenkt wird, dass die Schneidkante 15 des Schwerts 3 und die Streichfläche 14 der Leitungsführung 4 parallel zueinander verlaufen. Die Streichfläche 14 der Leitungsführung 4 verläuft weiterhin hinsichtlich der Geländeoberfläche 16 tiefer im Erdboden 17 als die Schneidkante 15 des Schwerts 3.

Letztendlich werden Schwert 3 und Leitungsführung 4 aus der fünften in eine sechste Stellung überführt, indem die Leitungsführung 4 mittels des zweiten Stellzylinders 9 in Relation zur Schwertführung 5 angehoben wird, so dass die Schneidkante 15 des Schwerts 3 und die Streichfläche 14 der Leitungsführung 4 in einer Ebene liegen.

### Bezugszeichenliste

- 1: Kabelpflug
- 2: Leitung
- 3: Schwert
- 4: Leitungsführung
- 5: Schwertführung
- 6: Aufhängung
- 7: Gelenkhebel
- 8: erster Stellzylinder
- 9: zweiter Stellzylinder
- 10: dritter Stellzylinder
- 11: Leitungskanal
- 12: Mündungsabschnitt
- 13: Wandung
- 14: Streichfläche
- 15: Schneidkante
- 16: Geländeoberfläche
- 17: Erdboden
- 18: Gelenk

- A: Fahrtrichtung

## Patentansprüche

1. Kabelpflug (1) zum Einbringen mindestens einer Leitung (2), insbesondere mindestens eines Rohres oder Kabels, in den Erdboden (17),
wobei der Kabelpflug (1) zur Bildung einer Erdrinne ein zum Eingriff in den Erdboden (17) geeignetes Schwert (3) und eine Leitungsführung (4) zum Einlegen der Leitung (2) in die durch das Schwert (3) gebildete oder bildbare Erdrinne umfasst,
wobei das Schwert (3) zumindest abschnittsweise in einer Schwertführung (5) angeordnet ist, und
wobei zur Verbindung von Schwert (3) und Leitungsführung (4) eine Aufhängung (6) am oberen Ende oder nahe dem oberen Ende von Schwert (3) und Leitungsführung (4), und
ein Gelenkhebel (7) zwischen den unteren Enden oder nahe den unteren Enden von Schwert (3) und Leitungsführung (4) vorgesehen sind, und wobei die Leitungsführung (4) in einer vorgesehenen Fahrtrichtung (A) hinter dem Schwert (3) angeordnet ist,
**dadurch gekennzeichnet dass**
an der Aufhängung (6) drei Stellzylinder (8; 9; 10) angeordnet sind, wobei ein erster Stellzylinder (8) zum gleichzeitigen Anheben oder Absenken von Schwert (3) und Leitungsführung (4) in Relation zur Schwertführung (5) vorgesehen ist,
ein zweiter Stellzylinder (9) zum Anheben oder Absenken des Schwerts (3) in Relation zur Schwertführung (5) vorgesehen ist, und
ein dritter Stellzylinder (10) zum Anheben oder Absenken der Leitungsführung (4) in Relation zur Schwertführung (5) vorgesehen ist.

2. Kabelpflug nach Anspruch 1,
**dadurch gekennzeichnet, dass**
die Leitungsführung (4) einen entgegen der vorgesehenen Fahrtrichtung (A) am unteren, dem Schwert (3) abgewandten Ende der Leitungsführung (4) ausmündenden Leitungskanal (11) umfasst,
wobei die den Mündungsabschnitt (12) des Leitungskanals (11) nach unten begrenzende Wandung (13) eine Streichfläche (14) bildet, und wobei das Schwert (3) an seinem unteren Ende eine Schneidkante (15) aufweist.

3. Kabelpflug nach Anspruch 2,
**dadurch gekennzeichnet, dass**
in einer Grundstellung der drei Stellzylinder (8; 9; 10) die Schneidkante (15) des Schwerts (3) im Wesentlichen in einer Ebene mit der Streichfläche (14) der Leitungsführung (4) verläuft, wobei die Ebene im Wesentlichen parallel zu und oberhalb einer Geländeoberfläche (16) verläuft, und wobei in einer Arbeitsstellung der drei Stellzylinder (8; 9; 10) Schwert (3) und Leitungsführung (4) in den Erdboden (17) eindringen oder in den Erdboden (17) eingedrungen sind, wobei die Schneidkante (15) und die Streichfläche (14) entlang oder unterhalb der Geländeoberfläche (16) verlaufen.

4. Kabelpflug nach einem der vorhergehenden Ansprüche,
**dadurch gekennzeichnet, dass**
der erste Stellzylinder (8) an seinem oberen Ende oder nahe seinem oberen Ende an der Aufhängung (6) befestigt ist und an seinem unteren Ende oder nahe seinem unteren Ende an der Schwertführung (5) befestigt ist, wobei eine Hubbewegung des ersten Stellzylinders (8) ein Anheben oder Absenken von Schwert (3) und Leitungsführung (4) bewirkt.

5. Kabelpflug nach Anspruch 4,
**dadurch gekennzeichnet, dass**
zum Überführen von Schwert (3) und Leitungsführung (4) aus der Grundstellung in die Arbeitsstellung das Schwert (3) und die Leitungsführung (4) mittels des ersten Stellzylinders (8) gleichzeitig abgesenkt werden oder absenkbar sind, so dass die Schneidkante (15) des Schwerts (3) und die Streichfläche (14) der Leitungsführung (4) anschließend im Wesentlichen parallel zu und entlang oder unterhalb der Geländeoberfläche (16) in einer Ebene verlaufen.

6. Kabelpflug nach Anspruch 5,
**dadurch gekennzeichnet, dass**
zum Überführen von Schwert (3) und Leitungsführung (4) aus der Arbeitsstellung in die Grundstellung das Schwert (3) und die Leitungsführung (4) mittels des ersten Stellzylinders (8) gleichzeitig angehoben werden oder anhebbar sind, wobei Schwert (3) und Leitungsführung (4) aus dem Erdboden (17) herausgehoben werden oder heraushebbar sind.

7. Kabelpflug nach einem der vorhergehenden Ansprüche,
**dadurch gekennzeichnet, dass**
der zweite Stellzylinder (9) an seinem oberen Ende oder nahe seinem oberen Ende an der Aufhängung (6) befestigt ist und an seinem unteren Ende oder nahe seinem unteren Ende an dem Schwert (3) befestigt ist, wobei eine Hubbewegung des zweiten Stellzylinders (9) ein Anheben oder Absenken des Schwerts (3) bewirkt.

8. Kabelpflug nach Anspruch 7,
**dadurch gekennzeichnet, dass**
zur Erleichterung des Eindringens von Schwert (3) und Leitungsführung (4) in den Erdboden (17) das Schwert (3) mittels des zweiten Stellzylinders (4) abgesenkt wird oder absenkbar ist, so dass die Schneidkante (3) des Schwerts (4) in Bezug zur Geländeoberfläche (16) tiefer in den Erdboden (17) eindringt.

9. Kabelpflug nach einem der vorhergehenden Ansprüche,
**dadurch gekennzeichnet, dass**
der dritte Stellzylinder (10) an seinem oberen Ende oder nahe seinem oberen Ende an der Aufhängung (6) befestigt ist und an seinem unteren Ende oder nahe seinem unteren Ende an der Leitungsführung (4) befestigt ist, wobei eine Hubbewegung des dritten Stellzylinders (10) ein Anheben oder Absenken der Leitungsführung (4) bewirkt.

10. Kabelpflug nach Anspruch 9,
**dadurch gekennzeichnet, dass**
zur Verbesserung des Einlegens der Leitung (2) in den Erdboden (17) die Leitungsführung (4) mittels des dritten Stellzylinders (10) abgesenkt wird oder absenkbar ist, so dass die Streichfläche (14) der Leitungsführung (4) in Bezug zur Geländeoberfläche (16) tiefer in den Erdboden (17) eindringt.

11. Kabelpflug nach einem der vorhergehenden Ansprüche,
**dadurch gekennzeichnet, dass**
der dritte Stellzylinder (10) an seinem oberen Ende oder nahe seinem oberen Ende an der Aufhängung (6) zur Anpassung des Winkels zwischen Schneidkante (15) des Schwerts (3) und Streichfläche (14) der Leitungsführung (4) über ein Gelenk (18) drehbeweglich befestigt ist und um eine durch den Mittelpunkt des Gelenks (18) verlaufende Schwenkachse schwenkbar ist.

12. Verfahren zum Betrieb eines Kabelpflugs, insbesondere eines Kabelpflugs nach einem der vorhergehenden Ansprüche,
**dadurch gekennzeichnet, dass**
in vorgesehener Reihenfolge mittels eines ersten Stellzylinders (8) Schwert (3) und Leitungsführung (4) angehoben oder abgesenkt werden, mittels eines zweiten Stellzylinders (9) das Schwert (3) angehoben oder abgesenkt wird,
mittels eines dritten Stellzylinders (10) die Leitungsführung (4) angehoben oder abgesenkt wird.

13. Verfahren nach Anspruch 12,
**dadurch gekennzeichnet, dass**
zur Überführung von Schwert (3) und Leitungsführung (4) aus der Grundstellung in die Arbeitsstellung das Schwert (3) und die Leitungsführung (4) mittels des ersten Stellzylinders (8) gleichzeitig abgesenkt werden, und
zur Überführung von Schwert (3) und Leitungsführung (4) aus der Arbeitsstellung in die Grundstellung das Schwert (3) und die Leitungsführung (4) mittels des ersten Stellzylinders (8) gleichzeitig angehoben werden.

14. Verfahren nach Anspruch 12 oder 13,
**dadurch gekennzeichnet, dass**
zur Verbesserung des Eindringens von Schwert (3) und Leitungsführung (4) in den Erdboden (17) einmal oder mehrfach nacheinander abwechselnd zuerst das Schwert (3) und nachfolgend die Leitungsführung (4) abgesenkt werden, indem einmal oder mehrfach nacheinander abwechselnd der zweite (8) und der dritte Stellzylinder (8) eine Hubbewegung ausführen.

15. Verfahren nach einem der Ansprüche 12 bis 14,
**dadurch gekennzeichnet, dass**
zur Verbesserung des Heraushebens von Schwert (3) und Leitungsführung (4) aus dem Erdboden einmal oder mehrfach nacheinander abwechselnd zuerst die Leitungsführung (4) und nachfolgend das Schwert (3) angehoben werden, indem einmal oder mehrfach nacheinander abwechselnd der dritte (9) und der zweite Stellzylinder (8) eine Hubbewegung ausführen.

## Claims

1. Cable plough (1) for introducing at least one line (2), in particular at least one pipe or cable, into the ground (17),
wherein the cable plough (1), for the purpose of forming a channel in the ground, comprises a blade (3), which is suitable for engaging in the ground (17), and a line guide (4) for laying the line (2) in the channel in the ground, which is, or can be, formed by the blade (3),
wherein the blade (3) is arranged, at least in part, in a blade guide (5), and
wherein, for the purpose of connecting the blade (3) and line guide (4), a suspension means (6) is provided at the upper end, or in the vicinity of the upper end, of the blade (3) and line guide (4) and an articulation lever (7) is provided between the lower ends, or in the vicinity of the lower ends, of the blade (3) and line guide (4), and
wherein the line guide (4) is arranged behind the blade (3), as seen in an envisaged direction of travel (A),
**characterized in that**
three control cylinders (8; 9; 10) are arranged on the suspension means (6),
wherein a first control cylinder (8) is provided for simultaneously raising or lowering the blade (3) and line guide (4) in relation to the blade guide (5),
a second control cylinder (9) is provided for raising or lowering the blade (3) in relation to the blade guide (5), and
a third control cylinder (10) is provided for raising or lowering the line guide (4) in relation to the blade guide (5).

2. Cable plough according to Claim 1,
**characterized in that**
the line guide (4) comprises a line duct (11), which opens out, in a direction counter to the envisaged direction of travel (A), at the lower end of the line guide (4), said end being directed away from the blade (3),
wherein the wall (13), which bounds the mouth-opening portion (12) of the line duct (11) in the downward direction, forms a scraping surface (14), and
wherein the blade (3) has a cutting edge (15) at its lower end.

3. Cable plough according to Claim 2,
**characterized in that**,
in a basic position of the three control cylinders (8; 9; 10), the cutting edge (15) of the blade (3) runs essentially in a single plane with the scraping surface (14) of the line guide (4), wherein the plane runs essentially parallel to, and above, a ground surface (16), and wherein, in an operating position of the three control cylinders (8; 9; 10), the blade (3) and line guide (4) penetrate into the ground (17) or have penetrated into the ground (17), wherein the cutting edge (15) and the scraping surface (14) run along, or beneath, the ground surface (16).

4. Cable plough according to one of the preceding claims,
**characterized in that**,
the first control cylinder (8), at its upper end, or in the vicinity of its upper end, is fastened on the suspension means (6) and, at its lower end, or in the vicinity of its lower end, is fastened on the blade guide (5), wherein a lifting movement of the first control cylinder (8) causes the blade (3) and line guide (4) to be raised or lowered.

5. Cable plough according to Claim 4,
**characterized in that**,
for the purpose of transferring the blade (3) and line guide (4) from the basic position into the operating position, the blade (3) and the line guide (4) are lowered, or can be lowered, simultaneously by means of the first control cylinder (8), and therefore the cutting edge (15) of the blade (3) and the scraping surface (14) of the line guide (4) then run in a single plane essentially parallel to, and along or beneath, the ground surface (16).

6. Cable plough according to Claim 5,
**characterized in that**,
for the purpose of transferring the blade (3) and line guide (4) from the operating position into the basic position, the blade (3) and the line guide (4) are raised, or can be raised, simultaneously by means of the first control cylinder (8), wherein the blade (3) and line guide (4) are raised out, or can be raised out, of the ground (17).

7. Cable plough according to one of the preceding claims,
**characterized in that**
the second control cylinder (9), at its upper end, or in the vicinity of its upper end, is fastened on the suspension means (6) and, at its lower end, or in the vicinity of its lower end, is fastened on the blade (3), wherein a lifting movement of the second control cylinder (9) causes the blade (3) to be raised or lowered.

8. Cable plough according to Claim 7,
**characterized in that**,
for the purpose of facilitating penetration of the blade (3) and line guide (4) into the ground (17), the blade (3) is lowered, or can be lowered, by means of the second control cylinder (4), and therefore the cutting edge (3) of the blade (4) penetrates more deeply into the ground (17), as seen in relation to the ground surface (16).

9. Cable plough according to one of the preceding claims,
**characterized in that**
the third control cylinder (10), at its upper end, or in the vicinity of its upper end, is fastened on the suspension means (6) and, at its lower end, or in the vicinity of its lower end, is fastened on the line guide (4), wherein a lifting movement of the third control cylinder (10) causes the line guide (4) to be raised or lowered.

10. Cable plough according to Claim 9,
**characterized in that**,
for the purpose of improving the operation of laying the line (2) in the ground (17), the line guide (4) is lowered, or can be lowered, by means of the third control cylinder (10), and therefore the scraping surface (14) of the line guide (4) penetrates more deeply into the ground (17), as seen in relation to the ground surface (16).

11. Cable plough according to one of the preceding claims,
**characterized in that**
the third control cylinder (10), at its upper end, or in the vicinity of its upper end, is fastened for rotation via an articulation (18) on the suspension means (6), and can be pivoted about a pivot axis running through the centre point of the articulation (18), for the purpose of adapting the angle between the cutting edge (15) of the blade (3) and the scraping surface (14) of the line guide (4).

12. Method of operating a cable plough, in particular a cable plough according to one of the preceding claims, **characterized in that**,
in the sequence envisaged, a first control cylinder (8) is used to raise or lower the blade (3) and line guide (4),
a second control cylinder (9) is used to raise or lower the blade (3),
a third control cylinder (10) is used to raise or lower the line guide (4).

13. Method according to Claim 12,
**characterized in that**,
for the purpose of transferring the blade (3) and line guide (4) from the basic position into the operating position, the blade (3) and the line guide (4) are lowered simultaneously by means of the first control cylinder (8), and,
for the purpose of transferring the blade (3) and line guide (4) from the operating position into the basic position, the blade (3) and the line guide (4) are raised simultaneously by means of the first control cylinder (8).

14. Method according to Claim 12 or 13,
**characterized in that**,
for the purpose of improving penetration of the blade (3) and line guide (4) into the ground (17), first of all the blade (3) and then the line guide (4) are lowered one or more times in alternating fashion one after the other, by virtue of the second control cylinder (8) and the third control cylinder (8) executing a lifting movement one or more times in alternating fashion one after the other.

15. Method according to one of Claims 12 to 14,
**characterized in that**,
for the purpose of improving the operation of raising the blade (3) and line guide (4) out of the ground, first of all the line guide (4) and then the blade (3) are raised one or more times in alternating fashion one after the other, by virtue of the third control cylinder (9) and the second control cylinder (8) executing a lifting movement one or more times in alternating fashion one after the other.

## Revendications

1. Enfouisseuse de câbles (1) pour l'introduction d'au moins une ligne (2), en particulier au moins un tuyau ou un câble, dans le sol (17), dans laquelle l'enfouisseuse de câbles (1) présente une lame (3) appropriée pour s'enfoncer dans le sol (17) pour réaliser une tranchée, et un guide de ligne (4) pour mettre en place la ligne (2) dans la tranchée formée ou pouvant être formée par la lame (3), dans laquelle la lame (3) est agencée au moins partiellement dans un guide de lame (5), et
dans laquelle, pour relier la lame (3) et le guide de ligne (4), sont prévus un dispositif de suspension (6) à l'extrémité supérieure, ou à proximité de l'extrémité supérieure de la lame (3) et du guide de ligne (4), et
un levier d'articulation (7) entre les extrémités inférieures ou à proximité des extrémités inférieures de la lame (3) et du guide de ligne (4), et dans laquelle ledit guide de ligne (4) est disposé derrière la lame (3), dans une direction de déplacement prévue (A), **caractérisée en ce que**
trois vérins de manoeuvre (8; 9; 10) sont disposés au niveau du dispositif de suspension (6), avec un premier vérin de manoeuvre (8) prévu pour lever ou abaisser la lame (3) et le guide de ligne (4) en même temps par rapport au guide de lame (5),
un deuxième vérin de manoeuvre (9) prévu pour lever ou abaisser la lame (3) par rapport au guide de lame (5), et
un troisième vérin de manoeuvre (10) prévu pour lever ou abaisser le guide de ligne (4) par rapport au guide de lame (5).

2. Enfouisseuse de câbles selon la revendication 1,
**caractérisée en ce que**
ledit guide de ligne (4) présente un canal de ligne (11) débouchant dans le sens contraire à la direction de déplacement prévue (A), au niveau de l'extrémité du guide de ligne (4) opposée à la lame (3), dans laquelle la partie d'embouchure (12) du canal de ligne (11) forme une paroi (13) délimitant une surface d'étalement (14) vers le bas, et
dans laquelle la lame (3) présente un bord de coupe (15) à son extrémité inférieure.

3. Enfouisseuse de câbles selon la revendication 2,
**caractérisé en ce que**
dans une position de base des trois vérins de manoeuvre (8; 9; 10), le bord de coupe (15) de la lame (3) s'étend sensiblement dans un plan avec la surface d'étalement (14) du guide de ligne (4), dans laquelle le plan s'étend sensiblement parallèle à et au-dessus d'une surface supérieure de sol (16), et dans laquelle, dans une position de travail des trois vérins de manoeuvre (8; 9; 10), la lame (3) et le guide de ligne (4) sont introduits dans le sol (17), dans laquelle le bord de coupe (15) et la surface d'étalement (14) s'étendent le long ou en dessous de la surface supérieure de sol (16).

4. Enfouisseuse de câbles selon l'une quelconque des revendications précédentes,
**caractérisée en ce que**
le premier vérin de manoeuvre (8) est fixé au niveau de son extrémité supérieure ou à proximité de son extrémité supérieure au dispositif de suspension (6), et est fixé au niveau de son extrémité inférieure ou à proximité de son extrémité inférieure au guide de lame (5), dans laquelle une course du premier vérin de manoeuvre (8) fait monter ou descendre la lame (3) et le guide de ligne (4).

5. Enfouisseuse de câbles selon la revendication 4,
**caractérisée en ce que**
pour transférer la lame (3) et le guide de ligne (4) à partir de la position de base jusque dans la position de travail, la lame (3) et le guide de ligne (4) sont abaissés ou peuvent être abaissés simultanément au moyen du premier vérin de manoeuvre (8), de sorte que le bord de coupe (15) de la lame (3) et la surface d'étalement (14) du guide de ligne (4) s'étendent sensiblement dans un plan parallèlement à et le long ou au-dessous de la surface supérieure de sol (16).

6. Enfouisseuse de câbles selon la revendication 5,
**caractérisée en ce que**
pour transférer la lame (3) et le guide de ligne (4) à partir de la position de travail jusque dans la position de base, la lame (3) et le guide de ligne (4) sont abaissés ou peuvent être abaissés simultanément au moyen du premier vérin de manoeuvre (8), la lame (3) et le guide de ligne (4) étant extraits ou pouvant être extraits du sol (17).

7. Enfouisseuse de câbles selon l'une quelconque des revendications précédentes,
**caractérisée en ce que**
le deuxième vérin de manoeuvre (9) est fixé à son extrémité supérieure ou à proximité de son extrémité supérieure au dispositif de suspension (6), et est fixé à son extrémité inférieure ou à proximité de son extrémité inférieure à la lame (3), dans laquelle une course du deuxième vérin de manoeuvre (9) amène la lame (3) à se lever ou à s'abaisser.

8. Enfouisseuse de câbles selon la revendication 7,
**caractérisée en ce que**
pour faciliter la pénétration de la lame (3) et du guide de ligne (4) dans le sol (17), la lame (3) est abaissée ou peut être abaissée au moyen du deuxième vérin de manoeuvre (4), de sorte que le bord de coupe (3) de la lame (4), par rapport à la surface supérieure de sol (16), pénètre plus profondément dans le sol (17).

9. Enfouisseuse de câbles selon l'une quelconque des revendications précédentes,
**caractérisée en ce que**
le troisième cylindre d'actionnement (10) est fixé à son extrémité supérieure ou à proximité de son extrémité supérieure au dispositif de suspension (6), et est fixé à son extrémité inférieure ou à proximité de son extrémité inférieure au guide de ligne (4), dans laquelle une course du troisième vérin de manoeuvre (10) amène le guide de ligne (4) à se lever ou à s'abaisser.

10. Enfouisseuse de câbles selon la revendication 9,
**caractérisée en ce que**
pour améliorer l'insertion de la ligne (2) dans le sol (17), le guide de ligne (4) est abaissé ou peut être abaissé par l'intermédiaire du troisième vérin de manoeuvre (10), de sorte que la surface d'étalement (14) du guide de ligne (4), par rapport à la surface supérieure de sol (16), pénètre plus profondément dans le sol (17).

11. Enfouisseuse de câbles selon l'une quelconque des revendications précédentes,
**caractérisée en ce que**
le troisième vérin de manoeuvre (10) est fixé de manière rotative à son extrémité supérieure ou à proximité de son extrémité supérieure au dispositif de suspension (6) pour ajuster l'angle entre le bord de coupe (15) de la lame (3) et la surface d'étalement (14) du guide de ligne (4) par l'intermédiaire d'une articulation (18), et peut pivoter autour d'un axe de pivotement s'étendant à travers le centre de l'articulation (18).

12. Procédé pour faire fonctionner une enfouisseuse de câbles, en particulier une enfouisseuse de câbles selon l'une quelconque des revendications précédentes,
**caractérisé en ce que**
dans l'ordre prévu, la lame (3) et le guide de ligne (4) sont levés ou abaissés au moyen du premier vérin de manoeuvre (8),
la lame (3) est levée ou abaissée au moyen du deuxième vérin de manoeuvre (9),
le guide de ligne (4) est levé ou abaissé au moyen du troisième vérin de manoeuvre (10).

13. Procédé selon la revendication 12,
**caractérisé en ce que**
pour transférer la lame (3) et le guide de ligne (4) à partir de la position de base jusque dans la position de travail, la lame (3) et le guide de ligne (4) sont abaissés simultanément au moyen du premier vérin de manoeuvre (8), et
pour transférer la lame (3) et le guide de ligne (4) à partir de la position de travail jusque dans la position de base, la lame (3) et le guide de ligne (4) sont levés simultanément au moyen du premier vérin de manoeuvre (8).

14. Procédé selon la revendication 12 ou 13,
**caractérisé en ce que**
pour améliorer la pénétration de la lame (3) et du guide de ligne (4) dans le sol (17), premièrement la lame (3) est abaissée une ou plusieurs fois à la suite, puis le guide de ligne (4), le deuxième (8) et le troisième vérin de manoeuvre (8) effectuant une course une ou plusieurs fois à la suite.

15. Procédé selon l'une quelconque des revendications 12 à 14, **caractérisé en ce que**
pour améliorer l'extraction de la lame (3) et du guide de ligne (4) hors du sol, une ou plusieurs fois successivement et en alternance, premièrement le guide de ligne (4) et ensuite la lame (3) sont levés, le troisième (9) et le deuxième vérin de manoeuvre (8) effectuant une course une ou plusieurs fois successivement et en alternance.
